# EUROPÄISCHE PATENTSCHRIFT

(11) **EP 4 663 428 B1**
(45) Veröffentlichungstag und Bekanntmachung des Hinweises auf die Patenterteilung: **18.11.2026**
(21) Anmeldenummer: 25179776.7
(22) Anmeldetag: 30.05.2025
(51) Int. Cl.: B60B 33/00, B60B 33/06

(54) **LENKROLLE**
CASTOR
ROULETTE PIVOTANTE

(30) Priorität: 14.06.2024 DE 202024103215 U
(43) Veröffentlichungstag der Anmeldung: 17.12.2025
(73) Patentinhaber: von der Mühlen, Roland, 58256 Ennepetal (DE)
(72) Erfinder: von der Mühlen, Roland, 58256 Ennepetal (DE)
(74) Vertreter: Patentanwälte Dörner & Kötter PartG mbB

(56) Entgegenhaltungen:
- CA-A1- 3 068 211
- DE-B4- 102012 201 654
- KR-B1- 101 652 001
- US-A1- 2009 056 070
- US-A1- 2018 271 276
- US-B1- 7 159 829

## Beschreibung

Die Erfindung betrifft eine Lenkrolle mit mindestens einem Rad und mit einem Gehäuse, das eine Achse aufweist, um welches das Rad drehbar ist, und welches ein Befestigungselement zum Anschluss an ein externes Bauteil aufweist.

Lenkrollen sind an sich bekannt (vgl. bspw. DE 79 22 004 U1). Es handelt sich dabei um ihre vertikale Achse schwenkbare Rollen. Sie bestehen aus einem Gehäuse und einem Rad. - Im Sinne der Erfindung ist unter einem Rad auch ein Doppelrad zu verstehen, was zu einer Doppellenkrolle führt -. Das Gehäuse weist eine Gabel zur Aufnahme des Rades und ein definiertes Befestigungselement zum Anschluss an ein externes Bauteil - Geräte, Möbel, Transportsysteme - auf. Das Befestigungselement ist schwenkbar mit der Gabel verbunden. Dadurch sind Lenkrollen in der Lage, sowohl Translations- als auch Rotationsbewegungen auszuführen.

Aus der CA 3 068 211 A1 ist eine Vorrichtung bekannt, die sowohl die Verwendung von Lenkrollen als auch von Gleitern an Tischen ermöglicht. Vergleichbar ist aus der US 2009/056070 A1 ein Adapter zur Montage von Rollen an höhenverstellbaren Beinen bekannt. Aus der KR 101652001 B1 ist eine federbelastete Radkonstruktion für eine Leiter oder Werkbank bekannt, bei der die Federkraft einstellbar ist.

Die bekannten Lenkrollen erfüllen die an sie gestellten Aufgaben. Allerdings tritt bspw. bei Verwendung der Lenkrollen an Tischen oftmals das Problem auf, dass benachbarte Tische, die mit den gleichen Lenkrollen und Tischbeinen versehen sind, unterschiedliche Höhen aufweisen. Dies hat in der Regel seine Ursache in Unebenheiten des Untergrunds. Aber auch Fertigungstoleranzen an den Tischen bzw. Möbelstücken können Ursache für einen solchen Höheunterschied sein. Der Höhenunterschied kann in solchen Fällen nur dadurch beseitigt werden, dass die Tische verschoben werden, um an Stellen zu stehen, an denen der Untergrund keine Unebenheiten aufweist.

Zur Beseitigung dieses Problems ist aus der DE 10 2012 201 654 B4 eine Vorrichtung zur Höhenverstellung insbesondere von Möbelbeinen bekannt, bei der mit Hilfe eines Tragstiftes eine Höhenverstellung erfolgen kann. Höhenverstellungen für ein mit Rollen versehenes Küchengerät bzw. für Haushaltsgeräte sind aus der US 7 159 829 B1 und US 2018/271276 A1 bekannt. Aus der US 2009/056070 A1 ist ein Adapter zur Montage von Rollen an höhenverstellbaren Beinen bekannt.

Vor diesem Hintergrund liegt der vorliegenden Erfindung die Aufgabe zugrunde, eine Lenkrolle zu schaffen, die in der Lage ist, Höhenunterschiede auszugleichen. Gemäß der Erfindung wird diese Aufgabe mit den Merkmalen des Patentanspruchs 1 gelöst.

Mit der Erfindung ist eine Lenkrolle geschaffen, die in der Lage ist, Höhenunterschiede auszugleichen. Durch das Vorsehen einer höhenverstellbaren Hülse ist der übrige Aufbau der Lenkrolle weitestgehend unverändert zu bekannten Lenkrollen, so dass der konstruktive und auch der fertigungstechnische Aufwand im Vergleich zu bekannten Lenkrollen verhältnismäßig gering ist.

In Weiterbildung der Erfindung ist die Hülse mit einem Außengewinde versehen, welches mit einem Drehring zusammenwirkt. Durch das Vorsehen einer Gewindekombination ist eine stufenlose Höhenverstellung möglich.

Vorteilhaft ist der Drehring auf der dem Boden abgewandten Seite des Gehäuses angeordnet. Dadurch ist der Drehring für einen Benutzer gut erreichbar, was die Handhabung erleichtert.

In Ausgestaltung der Erfindung ist der Drehring mittels einer Rasteinrichtung an dem Gehäuse befestigt. Dies stellt eine einfache und zugleich zuverlässige Befestigung an dem Gehäuse dar. Gleichzeitig stellt diese Art der Befestigung die Drehbarkeit des Rings auf dem Gehäuse sicher.

Bevorzugt ist die Hülse an ihrer dem Boden zugewandten Seite mit mindestens einer Rastnase versehen. Die Rastnase gewährleistet zum einen einen zuverlässigen Halt in dem Gehäuse, zum anderen verhindert sie beim Herausdrehen der Hülse, dass diese versehentlich derart weit herausgedreht wird, dass sie keinen ausreichenden Halt mehr für das externe Bauteil des Möbels o. dgl. Bereitstellen kann.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die Ansicht einer Lenkrolle;
- Figur 2: die Untersicht der in Figur 1 dargestellten Lenkrolle;
- Figur 3: die Draufsicht auf die in Figur 1 dargestellte Lenkrolle;
- Figur 4: die Ansicht der in Figur 1 dargestellten Lenkrolle teilweise im Schnitt;
- Figur 5: die dreidimensionale Darstellung der Untersicht der in Figur 1 dargestellten Lenkrolle;
- Figur 6: die dreidimensionale Darstellung der in Figur 1 dargestellten Lenkrolle mit minimalem Höhenausgleich;
- Figur 7: die dreidimensionale Darstellung der in Figur 1 dargestellten Lenkrolle mit maximalem Höhenausgleich;

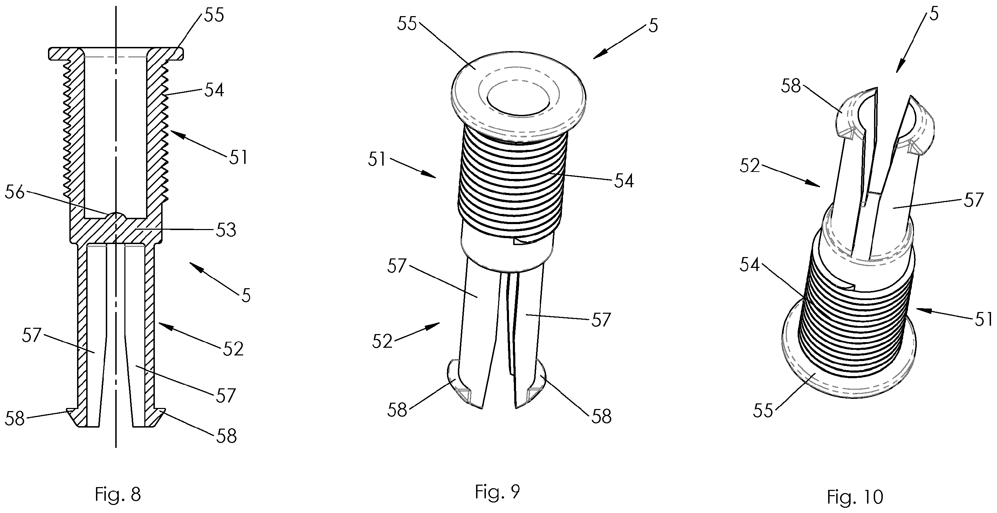

- Figur 8: den Längsschnitt durch eine Hülse;
- Figur 9: die dreidimensionale Darstellung der in Figur 8 dargestellten Hülse;
- Figur 10: die dreidimensionale Darstellung der Untersicht der in Figur 8 dargestellten Hülse;

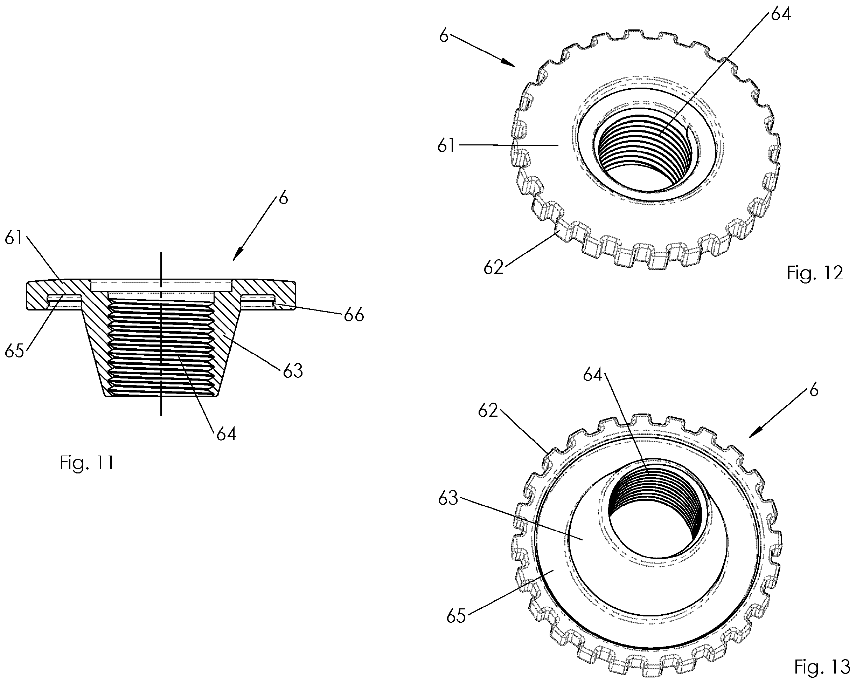

- Figur 11: den Längsschnitt durch einen Drehring;
- Figur 12: die dreidimensionale Darstellung des in Figur 11 dargestellten Drehrings;
- Figur 13: die dreidimensionale Darstellung der Untersicht des in Figur 11 dargestellten Drehrings;
- Figur 14: die Ansicht einer Lenkrolle in anderer Ausgestaltung;
- Figur 15: die Untersicht der in Figur 14 dargestellten Lenkrolle;
- Figur 16: die Draufsicht auf die in Figur 14 dargestellte Lenkrolle;
- Figur 17: die Ansicht der in Figur 14 dargestellten Lenkrolle teilweise im Schnitt;
- Figur 18: die dreidimensionale Darstellung der Untersicht der in Figur 14 dargestellten Lenkrolle;
- Figur 19: die dreidimensionale Darstellung der in Figur 14 dargestellten Lenkrolle mit minimalem Höhenausgleich;
- Figur 20: die dreidimensionale Darstellung der in Figur 14 dargestellten Lenkrolle mit maximalem Höhenausgleich;

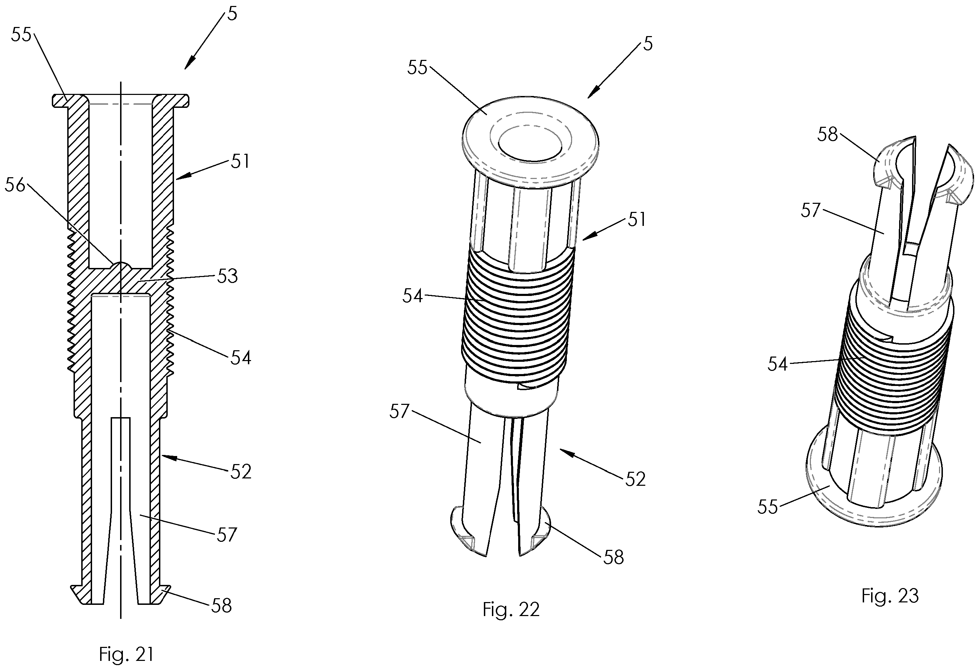

- Figur 21: den Längsschnitt durch eine Hülse in anderer Ausgestaltung;
- Figur 22: die dreidimensionale Darstellung der in Figur 21 dargestellten Hülse;
- Figur 23: die dreidimensionale Darstellung der Untersicht der in Figur 21 dargestellten Hülse;

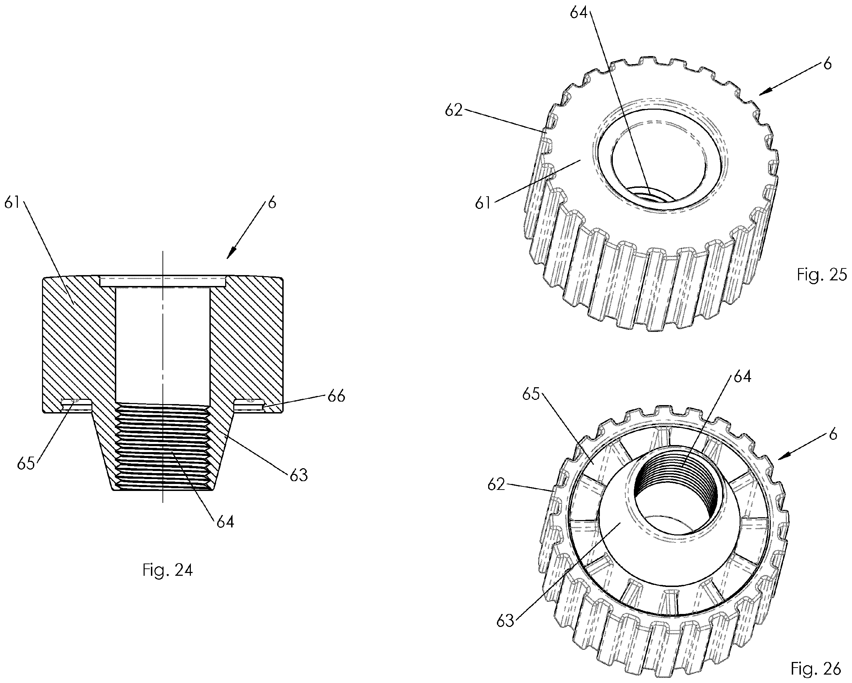

- Figur 24: den Längsschnitt durch einen Drehring in anderer Ausgestaltung;
- Figur 25: die dreidimensionale Darstellung des in Figur 24 dargestellten Drehrings;
- Figur 26: die dreidimensionale Darstellung der Untersicht des in Figur 24 dargestellten Drehrings.

Die als Ausführungsbeispiele gewählten Lenkrollen haben zwei Räder 1; es handelt sich folglich um Doppel-Lenkrollen. In Abwandlung der Ausführungsbeispiele können die Lenkrollen auch mit nur einem Rad versehen sein. Jede Lenkrolle hat ein Gehäuse 2, das eine nicht dargestellte Achse aufweist. Auf der Achse sind die Räder 1 drehbar gelagert. An den Gehäusen 2 ist in den Ausführungsbeispielen ein Feststellhebel 3 schwenkbar gelagert. Der Feststellhebel 3 ermöglicht eine Arretierung der Räder 1.

Jedes Gehäuse 2 weist eine Bohrung 21 auf, die in ihrem dem Boden abgewandten Bereich konisch ausgeführt sind. Benachbart zum dem dem Boden abgewandten Ende der Bohrung 21 ist außen an dem Gehäuse 2 ein Hinterschnitt 22 ausgebildet. An ihrem dem Boden zugewandten Ende ist die Bohrung 21 mit einem Absatz 23 versehen.

Jedes Gehäuse 2 weist ein Befestigungselement 4 zum Anschluss an ein externes Bauteil auf. Bei dem externen Bauteil kann es sich um Tischbeine, Stuhlbeine, Fußkreuze von Bürostühlen usw. handeln. Das Befestigungselement 4 ermöglicht ein Verschwenken der Lenkrollen um 360° an dem externen Bauteil.

Das Befestigungselement 4 ist erfindungsgemäß von einer Hülse 5 gebildet. Die Hülse 5 durchsetzt in montiertem Zustand die Bohrung 21 des Gehäuses 2. Die Hülse 5 besteht aus einem hohlzylindrischen Abschnitt 51 und einem Klemmabschnitt 52. Der Abschnitt 51 und der Klemmabschnitt 52 sind durch eine Zwischenwand 53 voneinander trennt.

Die Hülse 5 ist außen mit einem Gewinde 54 versehen. An seinem dem Klemmabschnitt 52 abgewandten Ende ist der Abschnitt 51 mit einem umlaufenden Bund 55 versehen. Auf der Zwischenwand 53 ist in dem hohlzylindrischen Abschnitt 51 ein halbkugelförmiger Vorsprung 56 ausgebildet, auf dem sich in montiertem Zustand das externe Bauteil abstützt.

Der Klemmabschnitt 52 ist von zwei Segmenten 57 gebildet, die an ihrem dem hohlzylindrischen Abschnitt 51 abgewandten Ende mit einer Rastnase 58 versehen sind. Die Segmente 57 haben Federeigenschaften. Aufgrund der Federeigenschaften der Segmente 57 ist das Einführen der Hülse 5 in die Bohrung 21 des Gehäuses 2 problemlos möglich.

Die Hülse 5 wirkt mit einem Drehring 6 zusammen. Der Drehring 6 besteht aus einem Ring 61, der in beiden Ausführungsbeispielen auf seinem Umfang eine Verzahnung 62 aufweist. In Abwandlung der Ausführungsbeispiele kann auf dem Umfang bspw. auch ein Mehrkant ausgebildet sein.

Der Drehring 6 ist zudem von einem Konus 63 gebildet, der von einer Gewindebohrung 64 durchsetzt ist. Benachbart zu dem Konus 63 ist in dem Ring 61 eine Rinne 65 ausgebildet, die an ihrer nach außen gerichteten Wandung mit einem Hinterschnitt 66 versehen ist.

Der Hinterschnitt 66 des Drehrings 6 wirkt mit dem Hinterschnitt 22 des Gehäuses 2 zusammen, in dem diese miteinander verrasten. Der Drehring 6 ist dadurch mittels einer Rasteinrichtung an dem Gehäuse 2 drehbar befestigt.

Das von der Hülse 5 gebildete Befestigungselement 4 ist erfindungsgemäß in dem Gehäuse 2 höhenverstellbar. Dies ist durch die Kombination des außen an der Hülse 5 ausgebildeten Gewindes 54 mit der Gewindebohrung 64 des Drehrings 6 ermöglicht. Da der Drehring 6 auf dem Gehäuse 2 drehbar ist und gleichzeitig aufgrund der Rasteinrichtung nicht höhenverstellbar ist, bewirkt eine Drehung des Drehrings 6 eine Übertragung auf die Hülse 5, die - je nach Drehrichtung - eine Auf- oder Abwärtsbewegung ausführt.

Die Aufwärtsbewegung wird durch die an den Segmenten 57 des Klemmabschnitts 52 versehenen Rastnasen 58 begrenzt. Sobald die Rastnasen 58 in dem Absatz 23 des Gehäuses 2 einliegen, kann keine weitere Aufwärtsbewegung mehr erfolgen. Hierdurch ist einerseits gewährleistet, dass die Hülse 5 derart weit aus dem Gehäuse 2 herausgedreht wird, dass sie herausfällt. Andererseits ist die Höhe, bis zu der die Hülse 5 herausgedreht werden kann dadurch auf ein Maß beschränkt, bis zu dem eine stabile Verbindung mit einem externen Bauteil gewährleistet ist.

Die Abwärtsbewegung wird durch den umlaufenden Bund 55 der Hülse 5 begrenzt. Sobald dieser in der Rinne 65 einliegt, ist ein weiteres Herabdrehen verhindert.

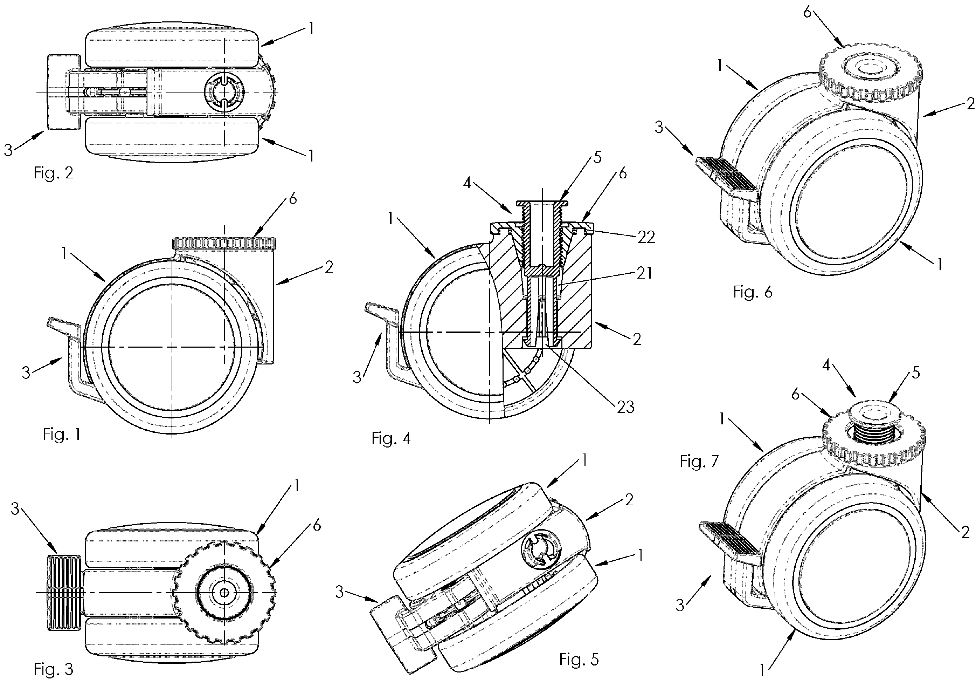

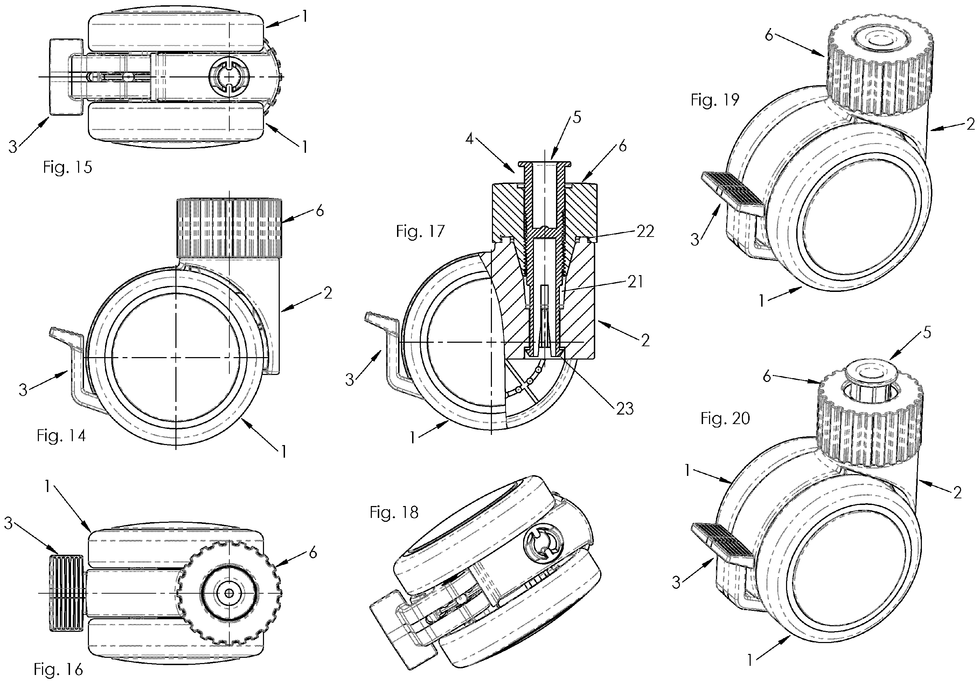

Wie den Figuren 6, 7, 19 und 20 zu entnehmen ist, ist mit der Erfindung ein Höhenausgleich erzielbar. Hierdurch lassen sich Unebenheiten des Bodens, auf dem die Lenkrolle aufsteht, ausgleichen. Dadurch ist es bspw. möglich, trotz Unebenheiten im Boden, Tischplatten benachbarter Tische auf dasselbe Niveau einzustellen.

Erkennbar haben die Ringe 6 der beiden Ausführungsbeispiele eine unterschiedliche Höhe. Ebenso unterscheiden sich die Hülsen 5 in den beiden Ausführungsbeispielen. Auch durch die Auswahl zwischen den mit unterschiedlichen Abmessungen ausgeführten Hülsen 5 und Drehringen 6 lassen sich unterschiedliche Höhen realisieren.

## Patentansprüche

1. Lenkrolle mit mindestens einem Rad (1) und mit einem Gehäuse (2), das eine Achse aufweist, um welches das Rad (1) drehbar ist, und welches ein Befestigungselement (4) zum Anschluss an ein externes Bauteil aufweist, **dadurch gekennzeichnet, dass** das Befestigungselement (4) von einer Hülse (5) gebildet ist, welche in dem Gehäuse (2) höhenverstellbar ist.

2. Lenkrolle nach Anspruch 1, **dadurch gekennzeichnet, dass** die Hülse (5) mit einem Gewinde (54) versehen ist, welches mit einem Drehring (6) zusammenwirkt.

3. Lenkrolle nach Anspruch 2, **dadurch gekennzeichnet, dass** der Drehring (6) auf der dem Boden abgewandten Seite des Gehäuses (2) angeordnet ist.

4. Lenkrolle nach einem der vorgenannten Ansprüche, **dadurch gekennzeichnet, dass** der Drehring (6) mittels einer Rasteinrichtung an dem Gehäuse (2) befestigt ist.

5. Lenkrolle nach einem der vorgenannten Ansprüche, **dadurch gekennzeichnet, dass** die Hülse (5) an ihrem dem Boden zugewandten Seite mit mindestens einer Rastnase (58) versehen ist.

## Claims

1. Castor with at least one wheel (1) and with a housing (2) that has an axis around which the wheel (1) is rotatable and which has a fixing element (4) to connect to an external component, **characterised in that** the fixing element (4) is formed by a sleeve (5) that is height-adjustable inside of the housing (2).

2. Castor according to claim 1, **characterised in that** the sleeve (5) is provided with a thread (54) that interacts with a rotating ring (6).

3. Castor according to claim 2, **characterised in that** the rotating ring (6) is arranged on the side of the housing (2) that faces away from the bottom.

4. Castor according to any one of the preceding claims, **characterised in that** the rotating ring (6) is attached to the housing (2) via a latching device.

5. Castor according to any one of the preceding claims, **characterised in that** the sleeve (5) is provided with at least one latching lug (58) on its side that faces the bottom.

## Revendications

1. Roulette pivotante comprenant au moins une roue (1) et un boîtier (2) qui présente un axe autour duquel la roue (1) peut tourner, et présentant un élément de fixation (4) pour le raccordement à une pièce externe, **caractérisée en ce que** l'élément de fixation (4) est formé par une douille (5) réglable en hauteur dans le boîtier (2).

2. Roulette pivotante selon la revendication 1, **caractérisée en ce que** la douille (5) est munie d'un filetage (54) qui interagit avec une bague de rotation (6).

3. Roulette pivotante selon la revendication 2, **caractérisée en ce que** la bague de rotation (6) est disposée sur le côté du boîtier (2) qui ne regarde pas le sol.

4. Roulette pivotante selon l'une des revendications précédentes, **caractérisée en ce que** la bague de rotation (6) est fixée contre le boîtier (2) par un dispositif à cran.

5. Roulette pivotante selon l'une des revendications précédentes, **caractérisée en ce que** la douille (5) est dotée d'au moins un cran (58) sur son côté regardant le sol.
